# EUROPEAN PATENT APPLICATION

(11) **EP 4 597 238 A1**
(43) Date of publication of application: **06.08.2025**
(21) Application number: 23869572.0
(22) Date of filing: 24.04.2023
(51) Int. Cl.: G05B 19/042

(54) **COMBINATION SWITCH SYSTEM INTEGRATED WITH DRIVER MONITORING, AND CONTROL METHOD**

(30) Priority: 30.09.2022 CN 202211215665
(71) Applicant: Shanghai Kostal-Huayang Automotive Electric Co., Ltd., Shanghai 201800 (CN); Kostal (Shanghai) Mechatronic Co., Ltd, Shanghai 201800 (CN)
(72) Inventor: WOJCIECH, Ficek, Shanghai 201800 (CN); WEN, Xiao, Shanghai 201800 (CN); XU, Mingze, Shanghai 201800 (CN); ZHANG, Qingan, Shanghai 201800 (CN); FU, Changlai, Shanghai 201800 (CN); LIU, Lixiang, Shanghai 201800 (CN)
(74) Representative: Schweiger, Martin
(86) International application number: PCT/CN2023/090295
(87) International publication number: WO 2024/066316

(57) **Abstract**

The present invention discloses a driver monitoring-integrated combined switch system and a control method. The solution includes a combined switch unit and a monitoring unit. The combined switch unit and the monitoring unit are integrated on a same main board. The combined switch unit independently performs combined switch control. The monitoring unit cooperates with the combined switch unit to perform driver monitoring. **In** this solution, distributed systems such as a combined switch and driver monitoring are integrated, and a camera and an image recognition algorithm controller are integrated in the combined switch unit, which can independently complete image analysis, and a monitoring result signal is outputted to a vehicle controller through a communication module. A circuit structure thereof is simple, so that signal interference during transmission can be reduced, and circuit reliability can be significantly improved.

## Description

### TECHNICAL FIELD

The present invention relates to the field of electronic information technologies, and in particular, to a system into which a driver monitoring unit and a combined switch unit may be integrated and a control method.

### BACKGROUND

Existing vehicle cockpits are generally equipped with a corresponding combined switch unit (SCM) and driver monitoring system (DMS) to improve vehicle driving safety and comfort.

To avoid interference between various control systems in a vehicle cockpit and thereby ensure stability of the control systems, the combined switch unit (SCM) and the DMS are arranged as distributed systems in the existing vehicle cockpit. For example, an independent combined switch unit, a camera system, and an image processing controller are respectively mounted to a tubular post, a shield, and a center control dashboard.

A DMS camera module generally includes a camera, an imaging module, and a processing unit. The camera has a field of view toward a driver. Due to factors such as a viewing angle of the camera, light, and occlusion, in a current implementation, mounting positions of the DMS camera mainly include a steering wheel, a position above a steering post, a center console, a position above a dashboard, an A pillar, and the like in a cockpit. Circuits of the imaging module and the processing unit are arranged on different printed circuit boards.

A prior DMS camera module is an independent plug-in module. Due to the different mounting position, additional circuit designing is required, which causes complex circuits and numerous of plugs for data transmission. Therefore, signal interference occurs during transmission, and circuit reliability is significantly reduced.

It may be learned from the above that, how to effectively integrate a DMS without affecting arrangement of other control systems in a cockpit and thereby simplify a circuit structure in the cockpit and improve stability and reliability of signal transmission is a problem in the field urgently to be solved.

### SUMMARY

**In** view of technical problems of complex circuits and reduced circuit reliability as a result of independently arranging a driver monitoring system (DMS) in existing vehicles as a distributed system, the solution is intended to provide a driver monitoring-integrated combined switch system. In this solution of the system, a DMS is directly integrated with a combined switch system without changing an overall arrangement solution of the combined switch system, which avoids additional circuit designing required for distributed arrangement of the DMS. In this way, a whole circuit structure is significantly simplified, thereby reducing signal interference during transmission, and significantly improving circuit reliability.

Based on the above, the present invention further provides a control method for a driver monitoring-integrated combined switch system. The control solution can realize stable driver monitoring and combined switch control.

To achieve the foregoing objectives, the present invention provides a driver monitoring-integrated combined switch system, including a combined switch unit and a monitoring unit. The combined switch unit and the monitoring unit are integrated on a same main board. The combined switch unit independently performs combined switch control. The monitoring unit cooperates with the combined switch unit to perform driver monitoring.

In some examples of the present invention, the main board is configured to fit to a steering post of a vehicle.

In some examples of the present invention, the combined switch unit includes a combined switch control module, a first communication module, and a power supply module. The power supply module supplies power to the combined switch control module, and the combined switch control module performs a data interaction with a vehicle controller through the first communication module.

In some examples of the present invention, the monitoring unit includes an image processing module. The image processing module is connected to the combined switch control module through a communication bus.

In some examples of the present invention, the image processing module cooperates with the first communication module through the combined switch control module to perform a data interaction with the vehicle controller.

In some examples of the present invention, the power supply module controls power-on/power-off of the image processing module through cooperation of the combined switch control module.

In some examples of the present invention, the monitoring unit includes an image processing module and a second communication module. The image processing module performs data interaction with the vehicle controller through the second communication module.

In some examples of the present invention, the image processing module is directly electrically connected to the power supply module.

To achieve the foregoing objectives, the present invention provides a control method for a driver monitoring-integrated combined switch system, including a combined switch control step and/or a driver monitoring step based on the above combined switch system.

In some examples of the present invention, the driver monitoring step includes: directly obtaining driver status information through an image capturing module of the monitoring unit, transmitting the driver status information to the image processing module for processing, and transmitting the processed data to a vehicle controller through the combined switch control module and the communication module.

In some examples of the present invention, the driver monitoring step includes: directly obtaining the driver status information through the image capturing module of the monitoring unit, transmitting the driver status information to the image processing module for processing, and directly transmitting the processed data to a vehicle controller through the communication module.

According to the driver monitoring-integrated combined switch system and the control method provided in the present invention, distributed systems such as a combined switch and driver monitoring are integrated, and a camera and an image recognition algorithm controller are integrated in the combined switch unit, which can independently complete image analysis, and a monitoring result signal is outputted to a vehicle controller through communication. A circuit structure thereof is simple, so that signal interference during transmission can be reduced, and circuit reliability can be significantly improved.

### BRIEF DESCRIPTION OF THE DRAWINGS

The present invention is further explained below with reference to the drawings and specific implementations.
FIG. 1 is a system principle diagram of a driver monitoring-integrated combined switch system in an example.
FIG. 2 is a schematic structural diagram of a combined switch unit of the driver monitoring-integrated combined switch system.
FIG. 3 is a schematic flowchart of a power supply system of the driver monitoring-integrated combined switch system in an example.
FIG. 4 is a schematic transmission diagram of a monitoring unit of the driver monitoring-integrated combined switch system in an example.
FIG. 5 is a schematic structural diagram of the driver monitoring-integrated combined switch system in an example 2.
FIG. 6 is a schematic structural diagram of the driver monitoring-integrated combined switch system in an example 3.
FIG. 7 is a schematic front view of an integrated structure of the monitoring unit and the combined switch unit.
FIG. 8 is a schematic back view of the integrated structure of the monitoring unit and the combined switch unit.

Reference numerals of components in the drawings are provided below:
1. Monitoring unit 2. Combined switch unit 3. Main board 11. Image capturing module 12. Image processing module 13. CAN transceiver 21. Power supply module 22. Combined switch control module 23. Communication module.

### DETAILED DESCRIPTION

To make technical means, creative features, purposes, and efficacy of the present invention easy to understand, the present invention is further elaborated below with reference to drawings.

In an existing vehicle cockpit, a combined switch system and a driver monitoring system (DMS) are arranged as distributed systems, which results in technical problems of complex circuits and reduced circuit reliability. In view of the technical problems, detailed researches are made on solutions of forming the combined switch system and the DMS in the vehicle cockpit. Based on functional characteristics of the combined switch system, in a solution of this application, a processing unit (such as an image processing unit and a signal processing unit) in the DMS is innovatively integrated into the combined switch system, to realize circuit structure simplification overall circuit operation reliability.

The combined switch system in the vehicle cockpit controls many functional components of vehicles, which is an inevitable and important control system in the vehicle cockpit. Therefore, the combined switch system has high performance in data processing and data signal transmission, and has a reliable arrangement solution.

**In** the solution of this application, based on positional convenience of a combined switch and necessity to the cockpit, the processing unit (such as an image processing unit and a signal processing unit) in the DMS is integrated into the combined switch system. With the high processing performance, the combined switch system cooperates with the integrated processing unit for driver monitoring to realize the driver monitoring. **In** this way, the DMS is integrated with the combined switch system without changing an overall arrangement solution of the combined switch system. The formed integrated system can realize combined switch control and driver monitoring independent of each other. Functions and control manners of an original combined switch system are retained without modification, and are not affected. The integrated driver monitoring unit cooperates with some functions of the combined switch system to complete driver monitoring. Therefore, independent and parallel running of the combined switch control function and the driver monitoring function is realized.

In addition, the integrated driver monitoring processing unit in the formed integrated system shares some functional components and circuit lines in the original combined switch system, which can avoid additional circuit designing required for distributed arrangement of the DMS.

### Example 1:

This example provides a driver monitoring-integrated combined switch system. In this example, a monitoring function unit of a DMS is integrated into a combined switch system in a vehicle cockpit to form an integrated combined switch system, so as to realize independent and parallel running of a combined switch control function and a driver monitoring function.

Specifically, in this example, a driver monitoring unit in the DMS is directly integrated into a combined switch unit in the combined switch system, which can independently complete image analysis to realize driver monitoring. Moreover, a result may be transmitted to a vehicle controller through a communication function of the original combined switch unit.

In the driver monitoring-integrated combined switch system, the original combined switch control function is independently realized through the original combined switch system, and the driver monitoring function is realized through the integrated DMS in cooperation with the combined switch system. In this way, an overall structure form of the driver monitoring-integrated combined switch system integrating is the same as that of the original combined switch system, and only a circuit structure needs to be arranged based on an arrangement solution of the original combined switch system, without a need to arrange an independent circuit structure for the DMS. Therefore, the line structure in the whole vehicle cockpit can be effectively simplified, so that signal interference during transmission can be reduced, and reliability of a whole control system can be significantly improved.

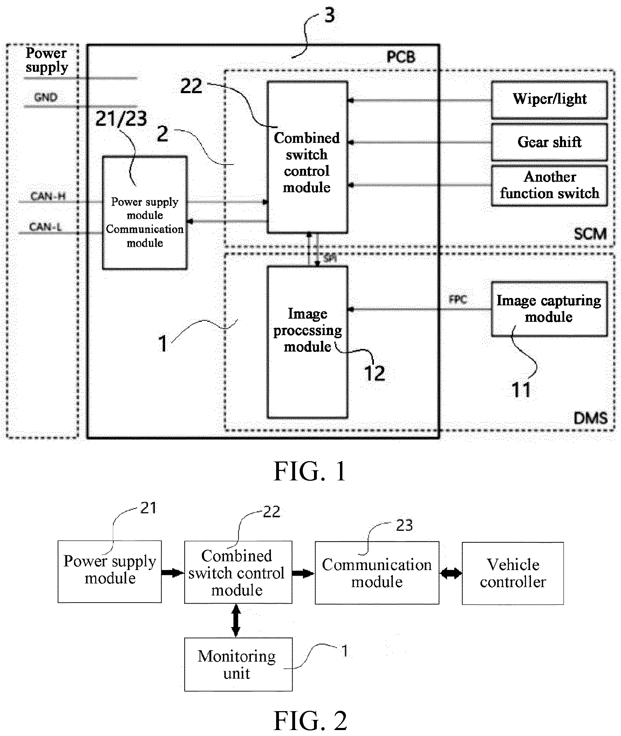

FIG. 1 is a system principle diagram of a driver monitoring-integrated combined switch system in an example.

It may be learned from the figure that, a whole integrated system mainly includes three parts: a main board 3, a combined switch unit 2, and a monitoring unit 1.

The monitoring unit 1 and the combined switch unit 2 are independently arranged on the main board 3, and the combined switch unit 2 and the monitoring unit 1 are further communicatively connected through a communication bus.

Referring to FIG. 2, the combined switch unit 2 includes a power supply module 21, a combined switch control module 22, and a communication module 23.

The combined switch control module 22and the communication module 23 are arranged on the main board 3. The combined switch control module 21 may be connected to a vehicle controller for a data interaction through the communication module 23. The combined switch control module transmits combined switch data generated by the combined switch control module 22 to the vehicle controller through the communication module 23.

The power supply module 21 supplies power to the combined switch control module 22. A power outlet of a combined switch supplies power to the monitoring unit 1 and a wiper/light, a gear shift, or another function switch.

Power-on/power-off of the monitoring unit 1 is realized through the combined switch control module 22, to realize synchronous sleep and wakeup of the monitoring unit 1 with the combined switch unit 2.

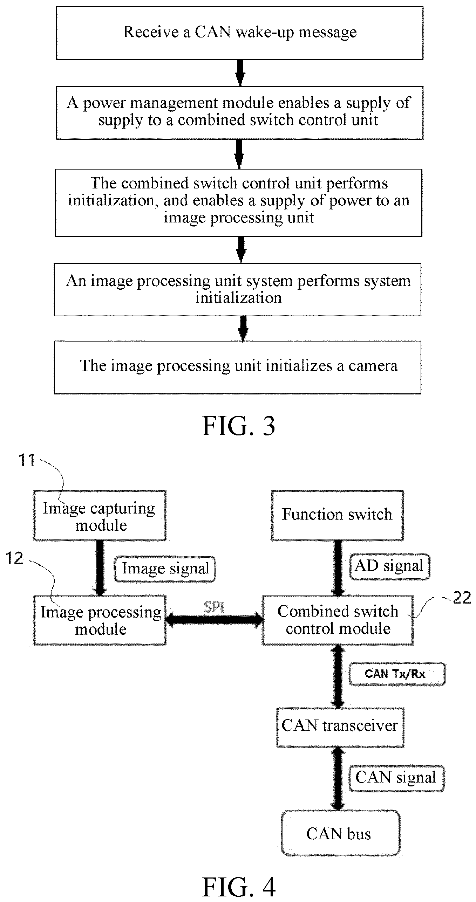

In an example, referring to FIG. 3, when a controller area network (CAN) wake-up message is received, the power supply module 21 enables a supply of power to the combined switch unit 2. The combined switch unit 2 performs initialization and enables a supply of power to the monitoring unit 1. Image data independently processed by the monitoring unit 1 is transmitted to the vehicle controller through the communication module 23 of the combined switch unit 2.

When the combined switch unit 2 enters a sleep state, the monitoring unit 1 is directly powered off.

The combined switch unit 2 composed of the combined switch control module 22, the communication module 23, and the power supply module 21 is well-known to a person skilled in the art, and therefore is not described in detail herein.

This solution is based on the combined switch unit 2 well-known to a person skilled in the art. Moreover, the monitoring unit 1 is integrated on the combined switch unit 2. The monitoring function of the monitoring unit 1 is realized through cooperation with the combined switch unit 2.

Further, the monitoring unit 1 includes an image capturing module 11 and an image processing module 12.

The image capturing module 11 may be a camera. Mounting positions of the camera mainly include a steering wheel, a position above a steering post, a center console, a position above a dashboard, an A pillar, and the like in a cockpit. A specific mounting position of the camera is not limited, and may be determined based on an actual situation. Details are not described in detail herein.

The camera transmits a light reflected or emitted by a to-be-photographed object into a lens of the camera, to form a photoelectric signal, and converts the photoelectric signal into an digital signal, which is outputted to the image processing module 12.

The image processing module 12 is arranged on the main board 3. After the image processing module 12 receives the photoelectric signal, the image processing module 12 converts the photoelectric signal into an electrical signal, and performs operations such as conversion, synthesis, compensation, and correction to convert the electrical signal into a digital signal image output.

The image processing module 12 usually includes an image processing system on chip (SOC) and a corresponding algorithm. Image analysis is independently completed through the image processing SOC and the algorithm.

The image processing chip has no communication function, and does not meet security functional requirements during data transmission. Therefore, referring to FIG. 4, when the data processed by the image processing module 12 is first transmitted to the combined switch control module 22, the data is transmitted to the vehicle controller through the communication module 23 that cooperates with the combined switch control module 22.

The monitoring unit 1 and the combined switch unit 2 share a set of communication modules, which saves a set of communication modules and further reduces a probability of signal interference during data transmission.

It should be noted herein that, the communication module 23 is a CAN transceiver. The CAN transceiver is a monolithic integrated circuit in which a CAN data transmitter and a data receiver are combined, which can realize a data interaction between the monitoring unit 1 and the combined switch unit 2 and the vehicle controller.

In the example 1, the power-on/power-off of the monitoring unit 1 is controlled through the combined switch control module 22, which can reduce a quantity of wire harnesses and simplify a circuit layout.

### Example 2:

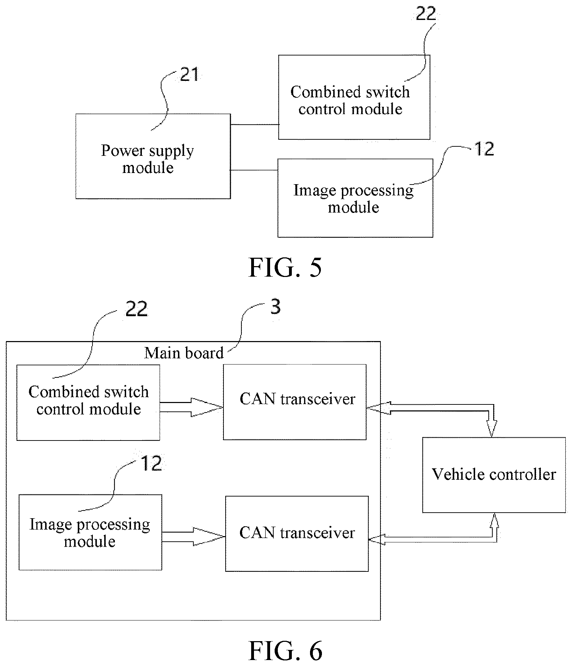

Referring to FIG. 5, a power outlet of the monitoring unit 1 is directly connected to the power supply module 21 of the combined switch unit 2. The power supply module 21 simultaneously supplies power to the combined switch unit 2 and the monitoring unit 1. Power-on/power-off of the combined switch unit 2 and the monitoring unit 1 is directly realized through the power supply module 21.

### Example 3:

Since the image processing chip in the embodiment 1 has no communication function and does not meet security functional requirements during data transmission, in the embodiment 1, the image data processed by the image processing module 12 is transmitted to the vehicle controller through the communication module 23 of the combined switch unit 2.

In this example, a structure of the combined switch unit remains unchanged. Referring to FIG. 6, another set of corresponding communication units, that is, a CAN transceiver 13, are further arranged for the monitoring unit 1. The CAN transceiver 13 is integrated on the main board 3 and is connected to the vehicle controller. The image data processed by the monitoring unit 1 is transmitted to the vehicle controller through the CAN transceiver 13, to realize independent data transmission of the combined switch control unit 2 and the monitoring unit 1.

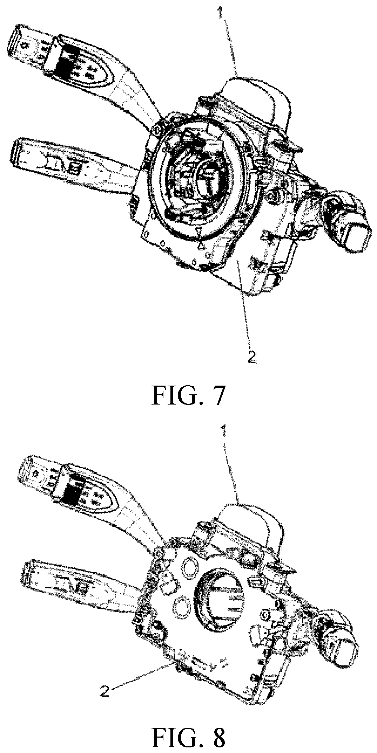

Based on the above, referring to FIG. 7 and FIG. 8, in this solution, a mechanical structure-integrated monitoring unit 1 is mounted above the combined switch unit 2, and is mounted to the steering post in the vehicle as a whole, which provides a desirable driver monitoring angle.

After integration of hardware, an interface toward the outside world is the same as that of the original combined switch unit. In other words, no additional interface is added to the vehicle, and only the camera module is added to the combined switch structure. Moreover, a signal transmitted by the combined switch unit to a CAN bus is added with a driver monitoring alarm signal. Therefore, a same set of connectors can be shared. In addition, a handle of the combined switch after integration remains unchanged.

The following provides an example of an operating process of the solution in use based on the embodiment in the embodiment 1. It should be noted herein that, the following content is merely a specific application example of this solution, and does not constitute a limitation on this solution.

In this solution, an image processing module and an imaging module are integrated into the main board of the original combined switch unit, which can independently complete image analysis, so that the system can realize face recognition-based fatigue monitoring, smoking monitoring, calling monitoring, distracted driving monitoring, seat belt monitoring, driver leaving monitoring, occlusion monitoring, and the like.

In an example, to realize face recognition-based fatigue monitoring, during vehicle startup, the power supply unit supplies power to the combined switch control module, and the combined switch control module performs initialization, and controls the monitoring unit to be enabled.

The camera in this solution is arranged on the steering post. The camera is configured to capture an image showing a face state of a driver. The captured image is transmitted to an image SOC processing chip for processing and imaging, and is then transmitted to the combined switch control module through SPI communication, and is transmitted to the bus through the CAN transceiver. A determination result is outputted through data analysis and comparison performed by a terminal.

According to the driver monitoring-integrated combined switch system and the control method of the foregoing solution, the rigid circuit board and the ports of the existing combined switch unit circuit may be used for the monitoring unit circuit , to reduce manufacturing costs.

In addition, the integrated packaging structure maintains style continuity of interiors in a cockpit, which meets a market requirement.

In addition, a low voltage differential signaling (LVDS) connector, a serializer, a deserializer, an image processing module, and a software system are omitted, which reduces signal interference during transmission, and significantly improves circuit reliability.

The basic principles, main features, and advantages of the present invention have been shown and described above. A person skilled in the art should understand that the present invention is not limited to the above embodiments. The above embodiments and the description in the specification only illustrate the principles of the present invention, and various changes and improvements will be made to the present invention without departing from the spirit and scope of the present invention. These changes and improvements fall within the protection scope of the present invention. The scope of the claims of the present invention is defined by the appended claims and the equivalents thereof.

## Claims

1. A driver monitoring-integrated combined switch system, comprising a combined switch unit and a monitoring unit, wherein the combined switch unit and the monitoring unit are integrated on a same main board, the combined switch unit independently performs combined switch control, and the monitoring unit cooperates with the combined switch unit to perform driver monitoring.

2. The driver monitoring-integrated combined switch system according to claim 1, wherein the main board is configured to fit to a steering post of a vehicle.

3. The driver monitoring-integrated combined switch system according to claim 1, wherein the combined switch unit comprises a combined switch control module, a first communication module, and a power supply module, the power supply module supplies power to the combined switch control module, and the combined switch control module performs a data interaction with a vehicle controller through the first communication module.

4. The driver monitoring-integrated combined switch system according to claim 3, wherein the monitoring unit comprises an image processing module, and the image processing module is connected to the combined switch control module through a communication bus.

5. The driver monitoring-integrated combined switch system according to claim 4, wherein the image processing module cooperates with the first communication module through the combined switch control module to perform a data interaction with the vehicle controller.

6. The driver monitoring-integrated combined switch system according to claim 4, wherein the power supply module controls power-on/power-off of the image processing module through cooperation of the combined switch control module.

7. The driver monitoring-integrated combined switch system according to claim 3, wherein the monitoring unit comprises an image processing module and a second communication module, and the image processing module performs a data interaction with the vehicle controller through the second communication module.

8. The driver monitoring-integrated combined switch system according to claim 4 or 7, wherein the image processing module is directly electrically connected to the power supply module.

9. A control method for a driver monitoring-integrated combined switch system, wherein the control method comprises a combined switch control step and/or a driver monitoring step based on the combined switch system according to any of claims 1 to 7.

10. The control method for a driver monitoring-integrated combined switch system according to claim 9, wherein the driver monitoring step comprises:
directly obtaining driver status information through an image capturing module of the monitoring unit, transmitting the driver status information to the image processing module for processing, and transmitting the processed data to a vehicle controller through the combined switch control module and the communication module;
or
directly obtaining the driver status information through the image capturing module of the monitoring unit, transmitting the driver status information to the image processing module for processing, and directly transmitting the processed data to a vehicle controller through the communication module.
